# EUROPÄISCHE PATENTSCHRIFT

(11) **EP 3 793 816 B1**
(45) Veröffentlichungstag und Bekanntmachung des Hinweises auf die Patenterteilung: **08.05.2024**
(21) Anmeldenummer: 18769989.7
(22) Anmeldetag: 12.09.2018
(51) Int. Cl.: B30B 1/40, F16C 29/12, B21D 28/32, B21D 37/12, F16C 29/02

(54) **KEILTRIEB MIT JUSTIERBARER FÜHRUNGSVORRICHTUNG**
WEDGE DRIVE HAVING ADJUSTABLE GUIDE APPARATUS
ENTRAÎNEMENT DE CALE À DISPOSITIF DE GUIDAGE RÉGLABLE

(30) Priorität: 14.05.2018 DE 102018111366
(43) Veröffentlichungstag der Anmeldung: 24.03.2021
(73) Patentinhaber: Fibro GmbH, 74855 Hassmersheim (DE)
(72) Erfinder: MEYER, Markus, 88239 Wangen im Allgäu (DE)
(74) Vertreter: Staeger & Sperling Partnerschaftsgesellschaft mbB
(86) Internationale Anmeldenummer: PCT/EP2018/074634
(87) Internationale Veröffentlichungsnummer: WO 2019/219222

(56) Entgegenhaltungen:
- WO-A1-2009/039895
- DE-U1-202011 108 083
- JP-A- 2003 042 154
- US-A1- 2017 014 889
- US-A1- 2017 014 890

## Beschreibung

Die Erfindung betrifft einen Keiltrieb mit einem ersten und zweiten Keiltriebteil sowie einer justierbaren Führungsvorrichtung, welche das erste und zweite Keiltriebteil führt und durch welche ein Führungsspiel zwischen dem ersten und zweiten Keiltriebteil einstellbar ist.

Aus dem Stand der Technik sind bereits verschiedene Ausführungsformen von Keiltrieben bekannt. Ein Keiltrieb umfasst zumeist einen Treiber, einen Schieber sowie ein Schieberbett. Der Treiber und das Schieberbett sind jeweils an einem Presswerkzeug befestigt und führen zwischen sich den Schieber, sodass der Schieber bei einer Hubbewegung des Presswerkzeugs von dem Treiber und dem Schieberbett geführt in eine zu der Hubrichtung schrägen Stanz- bzw. Arbeitsrichtung und zwischen einer Ausgangsstellung und einer Arbeitsstellung bewegt und geführt wird. Mittels der Bewegung in Arbeitsrichtung des Keiltriebs wird beispielsweise ein Stanzen oder Pressen schräg zur eigentlichen Hubrichtung des Presswerkzeugs realisiert.

Zwischen dem Schieber und dem Treiber sowie zwischen dem Schieber und dem Schieberbett ist herkömmlicherweise jeweils eine Führungsvorrichtung vorgesehen, welche den Schieber sowohl bei einem Aufwärtshub als auch bei einem Abwärtshub des Presswerkzeugs führt. Bei einem Abwärtshub werden für gewöhnlich an dem Treiber und dem Schieberbett fixierte Gleitplatten auf an dem Schieber fixierte Gleitplatten gepresst. Die Gleitplatten liegen dadurch flächig aneinander an, um über die gesamte Länge der Gleitplatten eine Gleitführung zu realisieren. Durch den Abwärtshub wird der Schieber in die Arbeitsstellung bewegt.

Bei einem Aufwärtshub des Presswerkzeugs, bei welchem sich der Treiber und das Schieberbett voneinander entfernen, wird der Schieber zumindest für einen Teil der Hubstrecke durch ein Haltemittel an dem Treiber und dem Schieberbett gehalten und in seine Ausgangsstellung zurück geführt. Das Haltemittel bildet dabei mittels Gleitflächen ebenfalls eine Gleitführung aus. Es kann vorkommen, dass sich eine der Gleitführungen verklemmen kann, wenn die Gleitführungen ein zu großes bzw. falsches Führungsspiel aufweisen.

Im Stand der Technik bekannte Keiltriebe sehen daher vor, dass das Führungsspiel der Gleitführung des Haltemittels oder das Führungsspiel der durch die Gleitplatten gebildeten Gleitführung durch Abschleifen einstellbar ist. Problematisch ist jedoch, dass bei einem Verschleiß der jeweiligen Gleitflächen kein Material aufgetragen werden kann, sodass bei einem zu großen Verschleiß neue und passgenaue Führungselemente verwendet werden müssen. Deren Herstellung sowie der Austausch sind aufgrund der geforderten Passgenauigkeit zeitaufwändig und teuer.

Soll ein Führungsspiel zwischen den Gleitflächen eingestellt werden, sehen bekannte Keiltriebe zudem teilweise keilförmige Zwischenstücke vor, welche in Gleitrichtung der Gleitführungen verschiebbar sind, wodurch der Abstand der Gleitflächen einstellbar ist. Eine dafür notwendige schräge Fläche erstreckt sich jedoch mit einer Steigung gegenüber der Gleitrichtung und zugleich orthogonal zu der Hubrichtung. Da sich die schräge Fläche mit der Steigung in Gleitrichtung erstreckt, ist der die Steigung bestimmende Winkel exakt einzuhalten, da bereits eine geringe Abweichung über die sich in Gleitrichtung erstreckende Länge des Zwischenstücks zu einer unerwünschten hohen Abweichung der Ist- von den Soll-Maßen führen würde. Die Herstellung eines solchen keilförmigen Zwischenstücks mit einer vorbestimmten Form ist daher sehr teuer und aufwändig.

Aus der DE 20 211 108 083 U1 ist dabei ein Keiltrieb gemäss dem Oberbegriff des Anspruchs 1 mit einer Führungsvorrichtung bekannt, welche eine Zwangsführungsfläche aufweist, deren Normalenvektor schräg zu einer Bewegungsebene ist.

Der Erfindung liegt deshalb die Aufgabe zugrunde, vorbesagte Nachteile zu überwinden und einen Keiltrieb mit einer justierbaren Führungsvorrichtung bereitzustellen, deren Führungsspiel auf einfache Weise und ohne Austausch eines Teils herstellbar ist, wobei die Führungsvorrichtung günstig und einfach herstellbar sein soll.

Diese Aufgabe wird durch die Merkmalskombination gemäß Patentanspruch 1 und 9 gelöst.

Erfindungsgemäß wird ein Keiltrieb mit einem ersten und zweiten Keiltriebteil und einer justierbaren Führungsvorrichtung vorgeschlagen. Die Führungsvorrichtung wird zumindest zum Teil von dem ersten und zweiten Keiltriebteil gebildet. Das erste und das zweite Keiltriebteil sind mittels eines in eine Hubrichtung gerichteten Hubs relativ zueinander beweglich. Durch den Hub werden das erste und das zweite Keiltriebteil gegeneinander entlang einer von der Führungsvorrichtung bestimmten und zu der Hubrichtung schrägen Gleitrichtung verschoben. Bei der Verschiebung in Gleitrichtung sind das erste und zweite Keiltriebteil durch die Führungsvorrichtung geführt. Das erste und das zweite Keiltriebteil werden bei einem Abwärtshub aufeinander gepresst und bei einem Aufwärtshub auseinander gezogen, wobei sie durch die Führungsvorrichtung jeweils zumindest über einen Teil des Hubs aneinander anliegen. Die Führungsvorrichtung weist hierzu eine Halteklammer auf. Durch die Halteklammer werden das erste und das zweite Keiltriebteil während des Hubs und insbesondere während des Aufwärtshubs aneinander gehalten. Die Halteklammer ist an dem ersten Keiltriebteil fixiert und an dem zweiten Keiltriebteil mit einer Gleitführung der Führungsvorrichtung in die Gleitrichtung verschiebbar gelagert. Ein Führungsspiel der Gleitführung ist durch ein Justiermittel der Führungsvorrichtung einstellbar. Die Führungsvorrichtung weist dazu eine Justagefläche und eine Zwangsführungsfläche auf. Durch eine Justage bzw. Einstellung einer Position der Justagefläche ist ein Führungsteil der Führungsvorrichtung entlang der Zwangsführungsfläche verschiebbar und dadurch das Führungsspiel einstellbar. Ein Normalenvektor der Zwangsführungsfläche ist dabei schräg zu einer aus der Hubrichtung und der Gleitrichtung aufgespannten Bewegungsebene.

Die Flächen (Zwangsführungsfläche, Zwangsführungsgegenfläche, Gleitfläche, Gleitgegenfläche, Justagefläche, Justagegegenfläche, Zusatzjustagefläche, Zusatzjustagegegenfläche) sind jeweils eben ausgebildet und erstrecken sich jeweils in einer zugehörigen Ebene.

Die Gleitrichtung kann sich entlang der Arbeitsrichtung erstrecken, sie kann jedoch auch schräg zu der Arbeitsrichtung verlaufen.

Das Führungsspiel der Gleitführung ist jeweils definiert als der Abstand in Hubrichtung einer Gleitfläche der Gleitführung von einer Gleitgegenfläche der Gleitführung, wenn das erste Keiltriebteil und das zweite Keiltriebteil aufeinander gepresst werden. Zugleich entspricht das Führungsspiel der Gleitführung dem Führungsspiel bzw. dem Abstand in Hubrichtung zwischen den Gleitplatten des ersten und zweiten Keiltriebteils, wenn das erste und zweite Keiltriebteil voneinander weg bewegt bzw. auseinander gezogen werden.

Dadurch, dass der Normalenvektor der Zwangsführungsfläche nicht in der Bewegungsebene liegt, wird das Bauteil, welches die Zwangsführungsfläche ausbildet, nicht entlang seiner gesamten Länge sondern quer dazu mit einem vorbestimmten Winkel geschliffen. Da die Breite quer zu der Länge kleiner ist als die Länge, führt eine Abweichung des Winkels zu einer geringen Abweichung der Ist- von der Sollform. Der Winkel muss dadurch vergleichsweise weniger exakt eingehalten werden, wodurch die Herstellung günstiger ist.

Bei einer vorteilhaften Ausführungsform verläuft eine Schnittgerade der Zwangsführungsfläche und der Bewegungsebene parallel zu der Gleitrichtung. Der Normalenvektor der Zwangsführungsfläche ist folglich rechtwinklig zu der Gleitrichtung. Durch eine Verschiebung des Führungsteils entlang der Zwangsführungsfläche ist das Führungsspiel der Gleitführung über die gesamte Länge der Gleitführung gleichmäßig einstellbar.

Der Normalenvektor ist unter einem Winkel α schräg zu der Bewegungsebene, welche von der Gleitrichtung und der Hubrichtung aufgespannt wird. Der Winkel α ist im Betrag zwischen 0 und 90°, wobei die Werte 0 und 90 ausgeschlossen sind. Vorzugsweise ist der Winkel α zwischen 20° und 60°.

Die Justagefläche ist vorzugsweise parallel zu der Bewegungsebene. Der Winkel zwischen der Justagefläche und dem Normalenvektor der Zwangsführungsfläche korrespondiert dabei zu dem Winkel α. Je kleiner der Winkel α desto geringer ist die Verschiebung des Führungsteils in Hubrichtung bei einer Verschiebung des Führungsteils entlang der Zwangsführungsfläche. Folglich ist das Führungsspiel feiner einstellbar je geringer der Winkel α gewählt wird, wobei die maximale Verschiebung des Führungsteils durch eine Breite des Führungsteils in eine zu der Hub- und Gleitrichtung orthogonal stehende Querrichtung bestimmt ist.

Erfindungsgemäß ist die Justagefläche an einem Justageteil vorgesehen. Die Position der Justagefläche ist durch eine Verschiebung oder Bearbeitung, insbesondere durch Materialabtrag des Justageteils, parallel verschiebbar. Das Justageteil ist das erste Keiltriebteil, das zweite Keiltriebteil, die Halteklammer oder das Führungsteil. Alternativ ist das Justageteil ein Adapterteil, das zu dem ersten Keiltriebteil, dem zweiten Keiltriebteil, der Halteklammer oder dem Führungsteil gehört. Ist das Justageteil als Adapterteil ausgebildet, kann die Justagefläche durch Bearbeitung des Adapterteils eingestellt werden, ohne jeweils das gesamte erste Keiltriebteil, das zweite Keiltriebteil die Halteklammer oder das Führungsteil Bearbeiten zu müssen. Das Adapterteil ist dann mit einer ersten Seite vorzugsweise angrenzend an das Führungsteil und mit einer zweiten gegenüberliegenden Seite an das erste Keiltriebteil, das zweite Keiltriebteil, die Halteklammer oder Führungsteil angrenzend angeordnet.

Das erste Keiltriebteil ist ein Treiber oder ein Schieberbett und das zweite Keiltriebteil ein Schieber. Alternativ ist das erste Keiltriebteil der Schieber und das zweite Keiltriebteil das Schieberbett. Die Führungsvorrichtung kann somit sowohl zwischen dem Schieber und dem Schieberbett oder dem Schieber und dem Treiber ausgebildet sein. Zugleich kann die Halteklammer an dem Treiber, dem Schieber oder dem Schieberbett befestigt sein.

Eine vorteilhafte Ausführung sieht vor, dass das zweite Keiltriebteil die Zwangsführungsfläche aufweist. Das Führungsteil bildet die Justagefläche und eine zu der Zwangsführungsfläche korrespondierende Zwangsführungsgegenfläche aus. Die Gleitführung ist durch eine an dem Führungsteil vorgesehene Gleitfläche und eine an der Halteklammer vorgesehene Gleitgegenfläche bestimmt.

Durch eine Justage der Position bzw. durch eine Parallelverschiebung der Justagefläche, wird das Führungsteil mit seiner Zwangsführungsgegenfläche entlang der Zwangsführungsfläche verschoben. Da die Zwangsführungsfläche gegenüber der Bewegungsebene einen Winkel α aufweist, hat die Bewegung eine Bewegungskomponente in Querrichtung und in Hubrichtung. Durch die Bewegung in Hubrichtung ist die Gleitfläche relativ zu der Gleitgegenfläche positionierbar und das Führungspiel einstellbar. Die Gleitfläche ist der Gleitgegenfläche durch die Verschiebung des Führungsteils entlang der Zwangsführungsfläche, wenn das erste auf das zweite Keiltriebteil gepresst wird, insbesondere annäherbar und das Führungsspiel folglich einstellbar bzw. verkleinerbar. Wird das erste und das zweite Keiltriebteil relativ zueinander in Hubrichtung auf Zug belastet, werden diese also auseinander gezogen, liegen die Gleitflächen dauerhaft aufeinander an und die Verschiebung des Führungsteils führt zu einer Annäherung des ersten an das zweite Keiltriebteil. Das gilt vorzugsweise für alle Ausführungsvarianten des Keiltriebs.

Eine davon abweichende jedoch ebenfalls vorteilhafte Ausführungsform sieht vor, dass das erste Keiltriebteil die Zwangsführungsfläche und die Justagefläche aufweist. Die Halteklammer bildet eine zu der Zwangsführungsfläche korrespondierende Zwangsführungsgegenfläche aus und umfasst folglich und vorzugsweise integral das Führungsteil. Durch eine Verschiebung des Führungsteils wird die gesamte Halteklammer verschoben. Die Gleitführung ist durch eine an dem zweiten Keiltriebteil vorgesehene Gleitfläche und eine an der Halteklammer vorgesehene Gleitgegenfläche bestimmt. Die Gleitfläche ist relativ zu der Gleitgegenfläche durch eine Justage der Position der Justagefläche an dem ersten Keiltriebteil durch eine Verschiebung des Führungsteils mit seiner Zwangsführungsgegenfläche entlang der Zwangsführungsfläche positionierbar und das Führungsspiel einstellbar. Die Gleitfläche ist der Gleitgegenfläche dabei ebenfalls insbesondere annäherbar und das Führungsspiel dadurch einstellbar bzw. verkleinerbar. Die Gleitfläche kann unmittelbar an dem zweiten Keiltriebteil ausgebildet sein. Alternativ ist das zweite Keiltriebteil zweistückig aus einem Hauptteil und einer Gleitschiene mit der Gleitfläche ausgeführt, wobei die Gleitschiene an dem Hauptteil fixiert ist.

Ein Keiltrieb gemäß einer weiteren vorteilhaften Ausführung sieht vor, dass das zweite Keiltriebteil die Zwangsführungsfläche, das erste Keiltriebteil die Justagefläche und die Halteklammer eine zu der Zwangsführungsfläche korrespondierende Zwangsführungsgegenfläche ausbildet. Ferner umfasst die Halteklammer das Führungsteil. Die Halteklammer kann mit dem Führungsteil zweistückig oder integral miteinander ausgeführt sein, wobei jeweils durch eine Verschiebung des Führungsteils die gesamte Halteklammer verschoben wird. Die Gleitführung ist durch die Zwangsführungsfläche und die Zwangsführungsgegenfläche bestimmt. Die Gleitfläche ist integral mit der Zwangsführungsfläche und die Gleitgegenfläche integral mit der Zwangsführungsgegenfläche ausgebildet. Die Zwangsführungsfläche ist relativ zu der Zwangsführungsgegenfläche durch eine Justage der Position der Justagefläche durch eine Verschiebung der Halteklammer mit ihrer Zwangsführungsgegenfläche entlang der Zwangsführungsfläche positionierbar. Die Gleitfläche ist der Gleitgegenfläche bzw. die Zwangsführungsfläche der Zwangsführungsgegenfläche durch die Justage der Position insbesondere annäherbar und das Führungsspiel bzw. der Abstand zwischen den Flächen einstellbar und insbesondere verkleinerbar.

Eine vorteilhafte Weiterbildung sieht dabei vor, dass das zweite Keiltriebteil zweiteilig ausgebildet ist und eine Zwangsführungsschiene umfasst. Die Zwangsführungsschiene weist die Zwangsführungsfläche und eine Zusatzjustagefläche auf. Die Zwangsführungsfläche ist relativ zu der Zwangsführungsgegenfläche durch eine Justage der Position der Zusatzjustagefläche durch eine Verschiebung der Halteklammer mit seiner Zwangsführungsgegenfläche entlang der Zwangsführungsfläche positionierbar. Insbesondere durch eine Parallelverschiebung mittels Materialabtrags an der Zusatzmontagefläche sind die Zwangsführungsfläche und die Zwangsführungsgegenfläche voneinander entfernbar und das Führungsspiel einstellbar bzw. vergrö-βerbar.

Ein Keiltrieb sieht vorzugsweise eine Hauptführungsvorrichtung und eine Zwangsrückführungsvorrichtung vor. Durch die Hauptführungsvorrichtung wird der Schieber jeweils mit dem Schieberbett sowohl beim Abwärtshub als auch beim Aufwärtshub über die gesamte Hubstrecke, die während eines Hubs entlang der Hubrichtung zurückgelegt wird, zusammengehalten. Die Zwangsrückführungsvorrichtung ist zwischen dem Schieber und dem Treiber angeordnet bzw. bestimmt. Durch die Zwangsrückführungsvorrichtung wird der Schieber über einen Teil der Hubstrecke beim Aufwärtshub an dem Treiber gehalten und so mittels einer Zwangsrückführung aus seiner Arbeitsstellung in seine ursprüngliche Ausgangsstellung zurück geführt.

Der erfindungsgemäße Keiltrieb weist in einer alternativen Ausführungsvorm eine Zwangsrückführungsvorrichtung und/oder eine Hauptführungsvorrichtung auf. Die Führungsvorrichtung mit der Halteklammer bildet die Zwangsrückführungsvorrichtung, durch welche das erste oder das zweite Keiltriebteil bei einem in die Hubrichtung gerichteten Aufwärtshub entlang des jeweils anderen Keiltriebteils entlang der Gleitrichtung aus einer Arbeitsstellung in eine Ausgangsstellung führbar ist. Alternativ bildet die Führungsvorrichtung die Hauptführungsvorrichtung.

Sowohl die Hauptführungsvorrichtung als auch die Zwangsrückführungsvorrichtung können jeweils aus einer Führungsvorrichtung gebildet werden.

Eine Führungsvorrichtung ist vorzugsweise an einer durch den Keiltrieb verlaufenden Symmetrieebene gespiegelt ausgeführt. Folglich weist eine Führungsvorrichtung zwei bezüglich der Symmetrieebene gespiegelt angeordnete Halteklammern, Führungsteile, Adapterstücke, Zwangsführungsflächen, Gleitflächen sowie zugehörige Gegenflächen auf.

Erfindungsgemäß wird ferner ein justierbares Führungssystem für einen Keiltrieb gemäß Anspruch 9 vorgeschlagen. Das Führungssystem umfasst eine Führungsvorrichtung mit einem ersten und zweiten Keiltriebteil und wird zumindest zum Teil durch das erste und zweite Keiltriebteil gebildet. Das erste und das zweite Keiltriebteil sind mittels eines in eine Hubrichtung gerichteten Hubs relativ zueinander sowie entlang einer von der Führungsvorrichtung bestimmten und zu der Hubrichtung schrägen Gleitrichtung durch die Führungsvorrichtung geführt verschiebbar. Die Führungsvorrichtung weist eine Halteklammer, die an dem ersten Keiltriebteil fixiert und an dem zweiten Keiltriebteil mit einer Gleitführung der Führungsvorrichtung in die Gleitrichtung verschiebbar gelagert ist. Ein Führungsspiel der Gleitführung ist durch ein Justiermittel der Führungsvorrichtung einstellbar, welche eine Justagefläche und eine Zwangsführungsfläche aufweist. Durch eine Justage bzw. Einstellung einer Position der Justagefläche ist ein Führungsteil der Führungsvorrichtung entlang der Zwangsführungsfläche verschiebbar und dadurch das Führungsspiel einstellbar. Ein Normalenvektor der Zwangsführungsfläche ist schräg zu einer aus der Hubrichtung und der Gleitrichtung aufgespannten Bewegungsebene.

Die vorstehend offenbarten Merkmale sind beliebig kombinierbar, soweit dies technisch möglich ist und diese nicht im Widerspruch zueinander stehen. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen ersten Keiltrieb in einer isometrischen Darstellung;
- Fig. 2: den ersten Keiltrieb in einer Seitenansicht;
- Fig. 3: einen zweiten Keiltrieb in einer isometrischen Darstellung;
- Fig. 4: den zweiten Keiltrieb in einer Seitenansicht;
- Fig. 5: einen Schnitt durch eine erste Ausführungsform eines Keiltriebs;
- Fig. 6: einen Schnitt durch eine zweite Ausführungsform eines Keiltriebs;
- Fig. 7: einen Schnitt durch eine dritte Ausführungsform eines Keiltriebs;
- Fig. 8: einen Schnitt durch eine vierte Ausführungsform eines Keiltriebs;
- Fig. 9: einen Schnitt durch eine fünfte Ausführungsform eines Keiltriebs;
- Fig. 10: einen Schnitt durch eine sechste Ausführungsform eines Keiltriebs.

Die Figuren sind beispielhaft schematisch. Gleiche Bezugszeichen in den Figuren weisen auf gleiche funktionale und/oder strukturelle Merkmale hin.

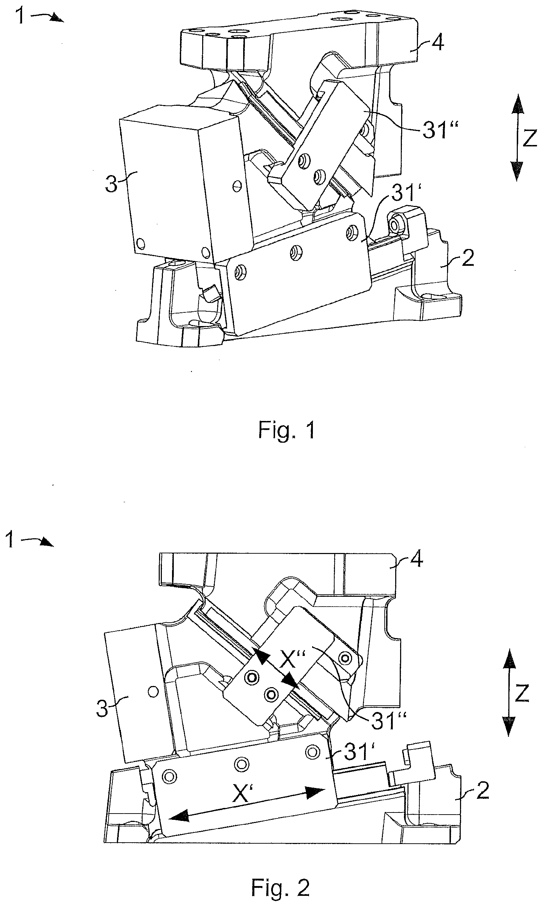

Die Figur 1 zeigt einen ersten Keiltrieb 1 in isometrischer Darstellung. Figur 2 stellt diesen in einer Seitenansicht dar. Die Hubrichtung Z, entlang derer der Treiber 4 und das Schieberbett 2 mit dem Schieber 3 aufeinander zu bzw. auseinander bewegt werden, ist jeweils durch einen Pfeil dargestellt. Zwischen dem Treiber 4 und dem Schieber 3 sowie zwischen dem Schieberbett 2 und dem Schieber 3 ist jeweils eine Führungsvorrichtung vorgesehen. Die Führungsvorrichtung zwischen dem Schieberbett 2 und dem Schieber 3 ist als Hauptführungsvorrichtung mit einer Halterklammer 31' und die Führungsvorrichtung zwischen dem Treiber 4 und dem Schieber 3 als Zwangsrückführungsvorrichtung mit einer Halteklammer 31" ausgebildet. Die Halteklammern 31', 31" sind jeweils an dem Schieber 3 fixiert und an dem jeweils anderen Teil des Keiltriebs 1 (Treiber 4 bzw. Schieberbett 2) mittels einer Gleitführung in jeweils eine Gleitrichtung X', X" gelagert. Alternativ könnten die Halteklammern 31', 31" jedoch auch an dem jeweils an dem Treiber 4 oder der Schieberbett 2 fixiert sein und an dem Schieber 3 mittels einer Gleitführung in jeweils eine Gleitrichtung X', X" verschiebbar gelagert sein. Der Keiltrieb 1 befindet sich in seiner Arbeitsstellung, in welcher der Schieber 3 entlang der Gleitrichtungen X', X" aus seiner Ausgangsstellung verschoben ist.

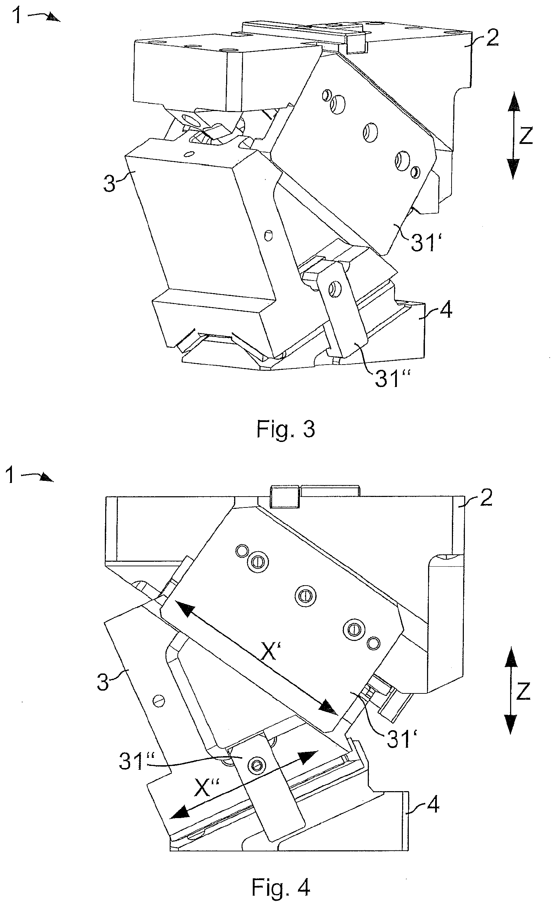

Die Figuren 3 und 4 zeigen einen zweiten Keiltrieb 1, entsprechend einer alternativen Ausführungsform. Bei dem in den Figuren 1 und 2 abgebildeten Keilschieber handelt es sich um einen Unterteilschieber und bei dem in den Figuren 3 und 4 gezeigten Keilschieber um einen Oberteilschieber. Die Halteklammer 31' der Führungsvorrichtung ist bei dem Keiltrieb 1 der Figuren 3 und 4 zwischen dem Schieberbett 2 und dem Schieber 3 an dem Schieberbett 2 fixiert.

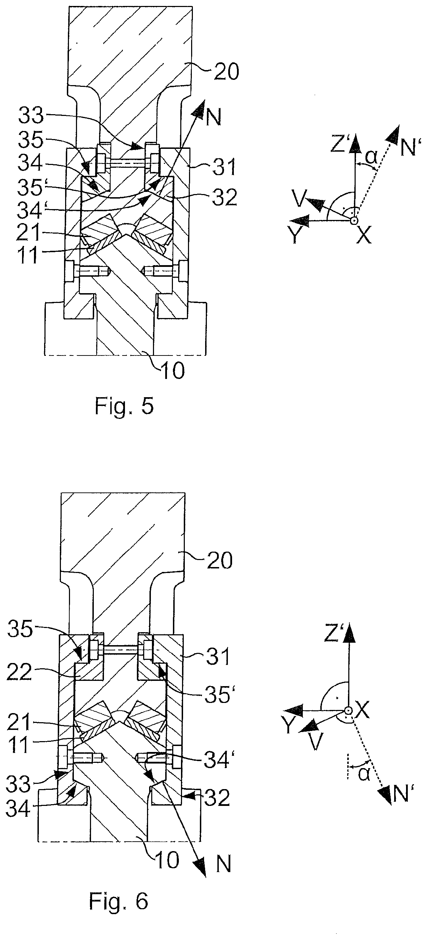

In den Figuren 5 bis 8 ist jeweils eine alternative Ausführungsform eines Keiltriebs ausschnittsweise und im Schnitt bzw. Querschnitt dargestellt. Der Schnitt bzw. Querschnitt verläuft jeweils orthogonal zu der Gleitrichtung X und durch eine jeweilige Halteklammer 31. Zu sehen ist jeweils ein erstes Keiltriebteil 10 und ein zweites Keiltriebteil 20, wobei das erste Keiltriebteil 10 der Schieber 3 und das zweite Keiltriebteil 20 das Schieberbett 2 oder der Treiber 4 sein kann. Alternativ ist das zweite Keiltriebteil 20 der Schieber 3 und das erste Keiltriebteil 10 das Schieberbett 2 oder der Treiber 4.

Abhängig davon, ob das erste Keiltriebteil 10 der Schieber 3 und zweite Keiltriebteil 20 das Schieberbett 2 oder der Treiber 4 ist, entspricht die Gleitrichtung X der Gleitrichtung X' oder der Gleitrichtung X". Ist das erste Keiltriebteil 10 der Treiber 2 und das zweite Keiltriebteil 20 der Schieber 3, entspricht die Gleitrichtung der Gleitrichtung X". Bei einer Ausführungsform mit dem ersten Keiltriebteil 10 als Schieberbett 4 und dem zweiten Keiltriebteil 20 als Schieber 3, ist die Gleitrichtung die Gleitrichtung X'.

Die Gleitrichtung X ist senkrecht zu der Darstellungsebene und aus dieser heraus weisend dargestellt. Die Hubrichtung Z ist jeweils als Projektion Z' der Hubrichtung Z in die Darstellungsebene hinein projiziert abgebildet (im Weiteren wird die Projektion Z` auch als Hubrichtung Z` bezeichnet).

An dem ersten Keiltriebteil 10 sind zu dem zweiten Keiltriebteil 20 weisend Gleitplatten 11 und an dem zweiten Keiltriebteil 20 zu dem ersten Keiltriebteil 10 weisend Gleitplatten 21 angeordnet. Die Gleitplatten 11, 21 sind aneinander anliegend dargestellt und sollen das erste und zweite Keiltriebteil 10, 20 bei einem Abwärtshub führen. Bei einem Abwärtshub, bei dem der Treiber 4 und das Schieberbett 2 in Hubrichtung Z aufeinander zu bewegt werden, wird das erste und das zweite Keiltriebteil 10, 20 zumindest über einen Teil des Abwärtshub aufeinander gepresst. Die Halteklammern 32 sind jeweils an dem ersten Keiltriebteil 10 mittels Schrauben fixiert.

Von der Hubrichtung Z' und der Gleitrichtung X wird jeweils eine orthogonal zu der Darstellungsebene liegende Bewegungsebene aufgespannt.

Die Führungsvorrichtungen zwischen dem ersten und zweiten Keiltriebteil 10, 20 der Figuren 5 bis 8 weisen jeweils eine Zwangsführungsfläche 34 auf, zwischen deren Normalenvektor N und der Bewegungsebene ein Winkel α liegt. Zur besseren Veranschaulichung ist der Normalenvektor N zusätzlich jeweils als ein in den Ursprung eines Koordinatensystems parallel verschobener Vektor N' dargestellt. Das Koordinatensystem wird durch die Hubrichtung Z bzw. Projektion Z` der Hubrichtung Z, die Gleitrichtung X und eine zu Hubrichtung Z` und Gleitrichtung X orthogonalen Querrichtung Y aufgespannt.

Wesentlich für die verschiedenen von den Figuren 5 bis 8 gezeigten Ausführungsbeispiele ist, dass die Führungsvorrichtung eine Zwangsführungsfläche 34 ausbildet entlang derer ein Führungsteil 32 verschiebbar ist. Das Führungsteil wird dabei entlang des Vektors V parallel zu der Zwangsführungsfläche 34 verschoben. Die Bewegung entlang des Vektors V weist jeweils eine Komponente in Querrichtung Y und Hubrichtung Z` auf, wodurch das Führungsteil 32 jeweils in Hubrichtung Z' verschoben wird und die jeweilige Gleitfläche 35 relativ zu der jeweiligen Gleitgegenfläche 35' bewegt wird.

Durch eine Parallelverschiebung der jeweiligen Justagefläche 33 mittels Materialabtrag sind die Gleitfläche 35 und die Gleitgegenfläche 35` aufeinander zu bewegbar. Das Führungsspiel der aus der Gleitfläche 35 und der Gleitgegenfläche 35' gebildeten Gleitführung wird dadurch verkleinert.

Der Winkel α bestimmt die Steigung der Zwangsführungsfläche 34 gegenüber einer aus der Gleitrichtung X und der Querrichtung Y aufgespannten Ebene. Ein Fehler bzw. ein fehlerhafter Winkel α bei der Herstellung der Zwangsführungsfläche 34 führt durch die vergleichsweise geringe Erstreckung der Zwangsführungsfläche 34 in Querrichtung Y lediglich zu einer geringen Abweichung der Ist-Maße von den Soll-Maßen der Zwangsführungsfläche 34.

Bei dem Ausführungsbeispiel der Figur 5 ist die Zwangsführungsfläche 34 an dem zweiten Keiltriebteil 20 ausgebildet. Das Führungsteil 32 weist die Justagefläche 33 auf. Das Führungsteil 32 wird über die Justagefläche 33 mittels einer Verschraubung an das zweite Keiltriebteil 20 gepresst. Durch Abschleifen des Führungsteils 32 an der Seite der Justagefläche 33 wird die Justagefläche 33 neu bestimmt bzw. parallel verschoben. Die Verschraubung verläuft durch ein Langloch in dem Führungsteil 32, sodass das Führungsteil 32 mit der parallel verschobenen Justagefläche 32 wieder an dem zweiten Keiltriebteil befestigbar ist. Durch den Materialabtrag an dem Führungsteil 32 ist dieses in seiner neuen Position gegenüber seiner ursprünglichen Position in Querrichtung Y verschoben, wobei das Führungsteil 32 zugleich mit seiner Zwangsführungsgegenfläche 34` entlang der Zwangsführungsfläche 34 in Hubrichtung Z` verschoben ist. Erreicht ein Verschleiß der Gleitfläche 35 einen Maximalwert, der nicht mehr durch Verschiebung des Führungsteils 32 entlang der Zwangsführungsfläche 34 korrigierbar ist, kann das Führungsteil 32 schnell und einfach ausgetauscht werden.

Die Zwangsführungsfläche 34 ist bei der Ausführungsform, wie sie in Figur 6 dargestellt ist, an dem ersten Keiltriebteil 10 ausgebildet. Das Führungsteil 32 ist integral mit der Halteklammer 31 ausgebildet. Ferner ist das zweite Keiltriebteil 20 zweiteilig. Das zweite Keiltriebteil 20 verfügt über eine Gleitschiene 22, welche die Gleitfläche 35 aufweist. Liegt ein großer Verschleiß der Gleitfläche 35 vor, kann die Gleitschiene 22 getauscht und anschließend das Führungsspiel eingestellt werden. Die Justagefläche 33 ist hierbei von einer in Querrichtung Y weisenden Seitenfläche des ersten Keiltriebteils gebildet. Durch Abschleifen der Seitenfläche wird die Justagefläche 33 und die mit einer Justagegegenfläche angrenzende Halteklammer 31 in Querrichtung Y parallel verschoben, sodass die Halteklammer 31 sich mit ihrer an dem Führungsteil 32 ausgebildeten Zwangsführungsgegenfläche 34' entlang der Zwangsführungsfläche 34 in die Querrichtung Y und die Hubrichtung Z' verschiebt. Durch die Verschiebung der Halteklammer 31 in Hubrichtung Z` wird die an der Halteklammer 31 ausgebildete Gleitgegenfläche 35' an die Gleitfläche 35 bzw. das erste Keiltriebteil 10 an das zweite Keiltriebteil 20 angenähert und das Führungsspiel eingestellt.

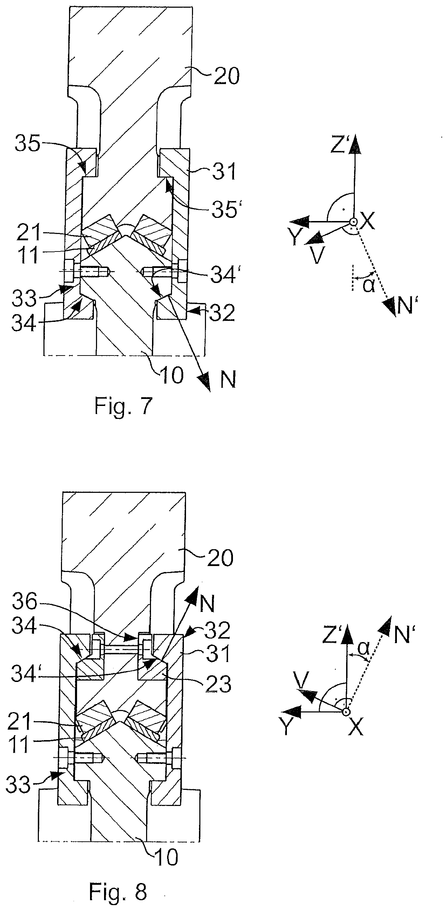

Figur 7 zeigt einen Ausschnitt eines Keiltriebs ähnlich zu dem aus Figur 6, wobei das zweite Keiltriebteil 20 einteilig ist und unmittelbar die Gleitfläche 35 ausbildet.

Bei der in Figur 8 dargestellten Ausbildungsalternative ist das Führungsteil 32 ebenfalls integral mit der Halteklammer 31 ausgebildet. Das zweite Keiltriebteil 20 ist zweiteilig und weist eine Zwangsführungsschiene 23 auf, welche über ein Verbindungsmittel mit einer Zusatzjustagefläche 36 gegen einen Grundkörper des Keiltriebteils 20 gepresst wird. Die Zwangsführungsschiene 23 bildet zudem die Zwangsführungsfläche 34 aus, an welcher die Zwangsführungsgegenfläche 34` der Halteklammer 32 anliegt. Bei der vorliegenden Ausführungsform gleitet die Halteklammer 32 mit ihrer Zwangsführungsgegenfläche 34' in Gleitrichtung X an der Zwangsführungsfläche 34 entlang, sodass die Zwangsführungsfläche 34 zugleich die Gleitfläche und die Zwangsführungsgegenfläche die Gleitgegenfläche bilden.

Die Justagefläche 33 ist an einer in Querrichtung Y weisenden Seite des ersten Keiltriebteils 10 gebildet, an welcher die Halteklammer 32 fixiert ist. Durch eine Parallelverschiebung der Justagefläche 33, beispielsweise durch Abschleifen der Seite des ersten Keiltriebteils 10, wird die Halteklammer 32 in Querrichtung Y verschoben, wodurch sich das Führungsteil 32 entlang der Zwangsführungsfläche 34 in Hubrichtung Z` verschiebt. Durch die Verschiebung in Hubrichtung Z` werden das erste Keiltriebteil 10 und das zweite Keiltriebteil 20 einander angenähert und das Führungsspiel damit eingestellt. Wird der Zustand betrachtet, in welchem das erste Keiltriebteil 10 und das zweite Keiltriebteil 20 aufeinander gepresst werden, wird die Zwangsführungsgegenfläche 34` in ihrer Funktion als Gleitgegenfläche der Zwangsführungsfläche 34 in ihrer Funktion als Gleitfläche angenähert. Werden das erste Keiltriebteil 10 und das zweite Keiltriebteil 20 auseinander gezogen, liegen die Zwangsführungsgegenfläche 34' und die Zwangsführungsfläche 34 aneinander an, wobei durch die Verschiebung in Hubrichtung Z' das erste und das zweite Keiltriebteil 10, 20 einander angenähert werden.

Durch eine Parallelverschiebung der Zusatzjustagefläche 36 an der Zwangsführungsschiene 23, beispielsweise durch Abschleifen, ist der gegenteilige Effekt erzielbar. Die Zwangsführungsfläche 34 ist von der Zwangsführungsgegenfläche 34' lösbar bzw. durch die Verschiebung der Zwangsführungsgegenfläche 34' entlang der Zwangsführungsfläche 34 in Hubrichtung Z` werden das erste und das zweite Keiltriebteil 10, 20 voneinander beabstandet.

Durch die Justagefläche 33 und die Zusatzjustagefläche 36 ist das Führungsspiel folglich vergrößer- oder verkleinerbar. Durch das Verkleinern oder Vergrößern kann das Führungsspiel exakt auf einen vorgegebenen Wert eingestellt bzw. justiert werden.

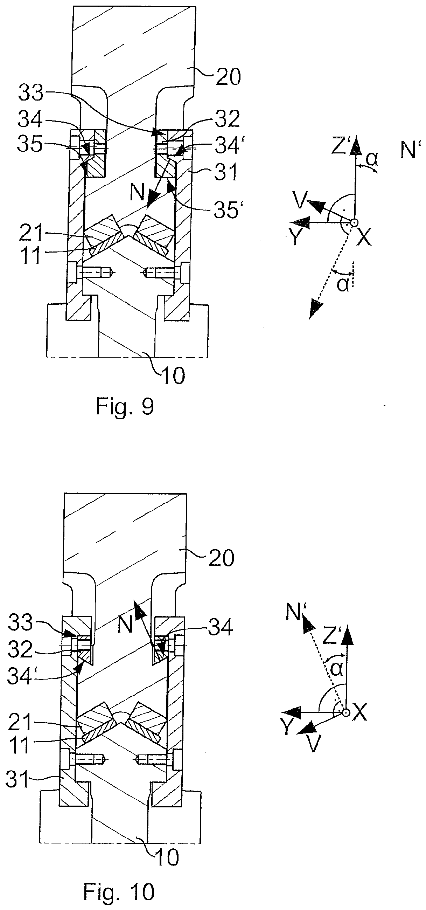

Die Figuren 9 und 10 zeigen jeweils eine weitere alternative Ausführung eines Keiltriebs 1 bzw. einen Schnitt durch ein erstes und ein zweites Keiltriebteil 10, 20.

Bei der Ausführungsvariante der Figur 9 ist die Zwangsführungsfläche 34 an der Halteklammer 31 und die Zwangsführungsgegenfläche 34' an dem Führungsteil 32 vorgesehen. Durch eine Parallelverschiebung der Justagefläche 33 wird das Führungsteil 32 in Querrichtung Y näher an die Halteklammer 31 verschoben, wodurch sich die Zwangsführungsgegenfläche 34' an der Zwangsführungsfläche 34 entlang verschiebt und das Führungsteil 32 in die Hubrichtung Z` verschoben wird. Dadurch wird die an dem Führungsteil 32 ausgebildete Gleitgegenfläche 35` der an dem zweiten Keiltriebteil 20 ausgebildeten Gleitfläche 35 angenähert. Der Vorteil hierbei ist, dass die Justierung der Führungsvorrichtung vollständig an der Halteklammer 31 bzw. mit dieser Verbunden ausgebildet ist und Verschleißteile einfach ausgetauscht werden können. Da die Justage der Führungsvorrichtung vollständig an der Halteklammer 33 in Zusammenspiel mit dem Führungsteil 32 realisiert ist, müssen die Zwangsführungsfläche 34 und die Zwangsführungsgegenfläche 34' nur über die Länge der Halteklammer 33 in Gleitrichtung X ausgebildet sein. Die für die Justage an der Zwangsführungsfläche 34 und Zwangsführungsgegenfläche 34` einzuhaltenden Fertigungstoleranzen müssen daher lediglich über die Länge der Halteklammer 32 in Gleitrichtung X eingehalten werden und nicht über die gesamte Erstreckung der Gleitführung in Gleitrichtung X. Zudem ist es auch möglich, die Justagefläche 33 an dem Führungsteil 32 vorzusehen.

In Figur 10 ist eine weitere Ausführungsform gezeigt, bei welcher das Führungsteil 32 an der Halteklammer 31 fixiert ist. Die Zwangsführungsfläche 34 ist an dem zweiten Keiltriebteil 20 vorgesehen, wobei ihr Normalenvektor N nach innen, zu einer nicht dargestellten Symmetrieebene des zweiten Keiltriebteils 20, verkippt ist. Der außenliegende Abschnitt der Zwangsführungsfläche 33 bildet gegenüber dem innenliegenden Abschnitt einen Vorsprung aus. Das Führungsteil 32 hintergreift mit der zu der Zwangsführungsfläche 34 korrespondierenden Zwangsführungsgegenfläche 34` den Vorsprung. Durch das Hintergreifen können sich das Führungsteil 32 und die daran fixierte Halteklammer 31 nicht von dem zweiten Keiltriebteil 20 lösen. Die Zwangsführungsfläche 34 und die Zwangsführungsgegenfläche 34' bilden dabei zugleich die Gleitfläche und die Gleitgegenfläche. Die Justagefläche 33 ist in dem vorliegend gezeigten Ausführungsbeispiel an dem Führungsteil 32 vorgesehen, kann jedoch zusätzlich oder alternativ auch an der Halteklammer 31 in dem Bereich, in welchem das Führungsteil 32 in Querrichtung Y an der Halteklammer 32 anliegt, ausgebildet sein. Durch einen Materialabtrag an der Justagefläche 33 mittels mechanischer Bearbeitung ist eine Parallelverschiebung der Justagefläche 33 umsetzbar, durch welche das Führungsteil 32 in Querrichtung Y nach außen verschoben wird. Durch die Zwangsführungsfläche 34 geführt, verschiebt sich dabei die Halteklammer in Hubrichtung Z` nach oben, wodurch das Führungsspiel zwischen Zwangsführungsfläche 34 und Zwangsführungsgegenfläche 34' einstellbar bzw. das erste an das zweite Keiltriebteil 10, 20 annäherbar ist.

Die Erfindung beschränkt sich in ihrer Ausführung nicht auf die vorstehend angegebenen bevorzugten Ausführungsbeispiele.

## Patentansprüche

1. Keiltrieb (1) mit einem ersten und zweiten Keiltriebteil (10, 20) und einer justierbaren, zumindest zum Teil von dem ersten und zweiten Keiltriebteil gebildeten Führungsvorrichtung, die mittels eines in eine Hubrichtung (Z) gerichteten Hubs relativ zueinander sowie entlang einer von der Führungsvorrichtung bestimmten und zu der Hubrichtung (Z) schrägen Gleitrichtung (X, X', X") durch die Führungsvorrichtung geführt verschiebbar sind, wobei
die Führungsvorrichtung eine Halteklammer (31) aufweist,
die Halteklammer (31) an dem ersten Keiltriebteil (10) fixiert und an dem zweiten Keiltriebteil (20) mit einer Gleitführung der Führungsvorrichtung in die Gleitrichtung (X, X', X") verschiebbar gelagert ist,
wobei ein Führungsspiel der Gleitführung durch ein Justiermittel der Führungsvorrichtung einstellbar ist, welche eine Justagefläche (33) und eine Zwangsführungsfläche (34) aufweist,
wobei durch eine Justage einer Position der Justagefläche (33) ein Führungsteil (32) der Führungsvorrichtung entlang der Zwangsführungsfläche (34) verschiebbar und dadurch das Führungsspiel einstellbar ist,
wobei ein Normalenvektor (N) der Zwangsführungsfläche (34) schräg zu einer aus der Hubrichtung (Z) und der Gleitrichtung (X, X', X") aufgespannten Bewegungsebene ist,
**dadurch gekennzeichnet, dass**
die Justagefläche (33) an einem Justageteil vorgesehen ist und das Justageteil derart ausgebildet ist, dass die Position der Justagefläche (33) durch Materialabtrag an dem Justageteil parallel verschiebbar ist,
das Justageteil das erste Keiltriebteil (10), das zweite Keiltriebteil (20), die Halteklammer (31) oder das Führungsteil (32) ist oder als ein Adapterteil von diesem umfasst wird,
wobei das erste Keiltriebteil (10) ein Treiber (4) oder ein Schieberbett (2) und das zweite Keiltriebteil (20) ein Schieber (3) ist oder
das erste Keiltriebteil (10) der Schieber (3) und das zweite Keiltriebteil (20) das Schieberbett (2) ist.

2. Keiltrieb (1) nach dem vorhergehenden Anspruch, wobei
eine Schnittgerade der Zwangsführungsfläche (34) und der Bewegungsebene parallel zu der Gleitrichtung (X, X', X") ist.

3. Keiltrieb (1) nach einem der vorhergehenden Ansprüche, wobei
der Normalenvektor (N) unter einem Winkel α schräg zu der Bewegungsebene ist und der Winkel α im Betrag zwischen 0 und 90° ist, wobei die Werte 0 und 90 ausgeschlossen sind, vorzugsweise zwischen 20° und 60°.

4. Keiltrieb (1) nach einem der vorhergehenden Ansprüche, wobei
das zweite Keiltriebteil (20) die Zwangsführungsfläche (34) aufweist,
das Führungsteil (32) die Justagefläche (33) und eine zu der Zwangsführungsfläche (34) korrespondierende Zwangsführungsgegenfläche (34') ausbildet und
die Gleitführung durch eine an dem Führungsteil (32) vorgesehene Gleitfläche (35) und eine an der Halteklammer (31) vorgesehene Gleitgegenfläche (35') bestimmt ist, wobei
die Gleitfläche (35) relativ zu der Gleitgegenfläche (35') durch eine Justage der Position der Justagefläche (33) an dem Führungsteil (32) durch eine Verschiebung des Führungsteils (32) mit seiner Zwangsführungsgegenfläche (34') entlang der Zwangsführungsfläche (34) positionierbar, insbesondere annäherbar und das Führungsspiel einstellbar ist.

5. Keiltrieb (1) nach einem der vorhergehenden Ansprüche 1 bis 3, wobei
das erste Keiltriebteil (10) die Zwangsführungsfläche (34) und die Justagefläche (33) aufweist,
die Halteklammer (31) eine zu der Zwangsführungsfläche (34) korrespondierende Zwangsführungsgegenfläche (34') ausbildet und das Führungsteil (32) umfasst und
die Gleitführung durch eine an dem zweiten Keiltriebteil (20) vorgesehene Gleitfläche (35) und eine an der Halteklammer (31) vorgesehene Gleitgegenfläche (35') bestimmt ist, wobei
die Gleitfläche (35) relativ zu der Gleitgegenfläche (35') durch eine Justage der Position der Justagefläche (33) an dem ersten Keiltriebteil (10) durch eine Verschiebung des Führungsteils (32) mit seiner Zwangsführungsgegenfläche (34') entlang der Zwangsführungsfläche (34) positionierbar, insbesondere annäherbar und das Führungsspiel einstellbar ist.

6. Keiltrieb (1) nach einem der vorhergehenden Ansprüche 1 bis 3, wobei
das zweite Keiltriebteil (10) die Zwangsführungsfläche (34), das erste Keiltriebteil (10) die Justagefläche (33) und die Halteklammer (31) eine zu der Zwangsführungsfläche (34) korrespondierende Zwangsführungsgegenfläche (34') ausbildet und das Führungsteil (32) umfasst und
die Gleitführung durch die Zwangsführungsfläche (34) und die Zwangsführungsgegenfläche (34') bestimmt ist, wobei
die Zwangsführungsfläche (34) relativ zu der Zwangsführungsgegenfläche (34') durch eine Justage der Position der Justagefläche (33) durch eine Verschiebung der Halteklammer (31) mit ihrer Zwangsführungsgegenfläche (34') entlang der Zwangsführungsfläche (34) positionierbar, insbesondere annäherbar und das Führungsspiel einstellbar ist.

7. Keiltrieb (1) nach dem vorhergehenden Anspruch, wobei
das zweite Keiltriebteil (20) zweiteilig ausgebildet ist und eine Zwangsführungsschiene (23) mit der Zwangsführungsfläche (34) und einer Zusatzjustagefläche (36) aufweist und
die Zwangsführungsfläche (34) relativ zu der Zwangsführungsgegenfläche (34') durch eine Justage der Position der Zusatzjustagefläche (36) durch eine Verschiebung der Halteklammer (31) mit seiner Zwangsführungsgegenfläche (34') entlang der Zwangsführungsfläche (34) positionierbar, insbesondere entfernbar und das Führungsspiel einstellbar ist.

8. Keiltrieb (1) nach einem der vorhergehenden Ansprüche, wobei
dieser eine Zwangsrückführungsvorrichtung aufweist, welche von der Führungsvorrichtung mit der Halteklammer (31) gebildet ist, durch welche das erste Keiltriebteil (10) oder das zweite Keiltriebteil (20) bei einem in die Hubrichtung (Z) gerichteten Aufwärtshub entlang des jeweils anderen Keiltriebteils (20, 10) entlang der Gleitrichtung (X, X', X") aus einer Arbeitsstellung in eine Ausgangsstellung führbar ist.

9. Justierbares Führungssystem für einen Keiltrieb (1) umfassend eine Führungsvorrichtung mit einem ersten und zweiten Keiltriebteil (10, 20), die durch das erste und zweite Keiltriebteil (10, 20) gebildet ist, wobei
das erste und zweite Keiltriebteil (10, 20) mittels eines in eine Hubrichtung (Z) gerichteten Hubs relativ zueinander sowie entlang einer von der Führungsvorrichtung bestimmten und zu der Hubrichtung (Z) schrägen Gleitrichtung (X, X', X") durch die Führungsvorrichtung geführt verschiebbar sind, wobei
die Führungsvorrichtung eine Halteklammer (31) aufweist,
die Halteklammer (31) an dem ersten Keiltriebteil (10) fixiert und an dem zweiten Keiltriebteil (20) mit einer Gleitführung der Führungsvorrichtung in die Gleitrichtung (X, X', X") verschiebbar gelagert ist,
**dadurch gekennzeichnet, dass**
ein Führungsspiel der Gleitführung durch ein Justiermittel der Führungsvorrichtung einstellbar ist, welche eine Justagefläche (33) und eine Zwangsführungsfläche (34) aufweist,
wobei durch eine Justage einer Position der Justagefläche (33) ein Führungsteil (32) der Führungsvorrichtung entlang der Zwangsführungsfläche (34) verschiebbar und dadurch das Führungsspiel einstellbar ist, wobei
ein Normalenvektor (N) der Zwangsführungsfläche (34) schräg zu einer aus der Hubrichtung (Z) und der Gleitrichtung (X, X', X") aufgespannten Bewegungsebene ist
**dadurch gekennzeichnet, dass** die Justagefläche (33) an einem Justageteil vorgesehen ist und die Position der Justagefläche (33) durch Materialabtrag an dem Justageteil parallel verschiebbar ist,
wobei das Justageteil das erste Keiltriebteil (10), das zweite Keiltriebteil (20), die Halteklammer (31) oder das Führungsteil (32) ist oder als ein Adapterteil von diesem umfasst wird.

## Claims

1. A wedge drive (1), having first and second wedge drive parts (10, 20) and an adjustable guide apparatus formed at least in part by the first and second wedge drive parts, which are movable, by means of a stroke directed in a stroke direction (Z) and guided by the guide apparatus, relative to one another and along a sliding direction (X, X', X") determined by the guide apparatus and at an angle to the stroke direction (Z), wherein
the guide apparatus has a retaining clip (31),
the retaining clip (31) is fixed to the first wedge drive part (10) and mounted on the second wedge drive part (20) with a sliding guide of the guide apparatus so as to be movable in the sliding direction (X, X', X"),
wherein a guide clearance of the sliding guide is variable by means of an adjustment means of the guide apparatus, which has an adjustment surface (33) and a forced guidance surface (34),
wherein, by adjustment of a position of the adjustment surface (33), a guide part (32) of the guide apparatus is movable along the forced guidance surface (34) and the guide clearance is variable thereby,
wherein a normal vector (N) of the forced guidance surface (34) is at an angle to a plane of movement spanned by the stroke direction (Z) and the sliding direction (X, X', X"),
**characterized in that**
the adjustment surface (33) is provided on an adjustment part, and the adjustment part is configured such that the position of the adjustment surface (33) is movable in parallel by material removal on the adjustment part,
the adjustment part of the first wedge drive part (10), the second wedge drive part (20), the retaining clip (31) or the guide part (32) is or is comprised by an adapter part,
wherein the first wedge drive part (10) is a driver (4) or a slider bed (2) and the second wedge drive part (20) is a slider (3), or
the first wedge drive part (10) is the slider (3) and the second wedge drive part (20) is the slider bed (2).

2. The wedge drive (1) according to the preceding claim, wherein
a line of intersection of the forced guidance surface (34) and the plane of movement is parallel to the sliding direction (X, X', X").

3. The wedge drive (1) according to any one of the preceding claims, wherein the normal vector (N) is inclined to the plane of movement at an angle α, and the angle α is within the amount between 0 and 90°, excluding the values 0 and 90, preferable between 20° and 60°.

4. The wedge drive (1) according to any one of the preceding claims, wherein the second wedge drive part (20) has the forced guidance surface (34),
the guide part (32) forms the adjustment surface (33) and a mating forced guidance surface (34') corresponding to the forced guidance surface (34), and
the sliding guide is determined by a sliding surface (35) provided on the guide part (32) and a mating sliding surface (35') provided on the retaining clip (31), wherein the sliding surface (35) is positionable, in particular approachable, relative to the mating sliding surface (35') by adjustment of the position of the adjustment surface (33) on the guide part (32) by moving the guide part (32) with its mating forced guidance surface (34') along the forced guidance surface (34), and the guide clearance is variable.

5. The wedge drive (1) according to any one of preceding claims 1 to 3, wherein the first wedge drive part (10) has the forced guidance surface (34) and the adjustment surface (33),
the retaining clip (31) forms a mating forced guidance surface (34') corresponding to the forced guidance surface (34) and comprises the guide part (32), and
the sliding guide is determined by a sliding surface (35) provided on the wedge drive part (20) and a mating sliding surface (35') provided on the retaining clip (31), wherein
the sliding surface (35) is positionable, in particular approachable, relative to the mating sliding surface (35') by adjustment of the position of the adjustment surface (33) on the first wedge guide part (10) by moving the guide part (32) with its mating forced guidance surface (34') along the forced guidance surface (34), and the guide clearance is variable.

6. The wedge drive (1) according to any one of preceding claims 1 to 3, wherein the second wedge drive part (10) forms the forced guidance surface (34), the first wedge drive part (10) forms the adjustment surface (33) and the retaining clip (31) forms a mating forced guidance surface (34') corresponding to the forced guidance surface (34) and comprises the guide part (32), and
the sliding guide is determined by the forced guidance surface (34) and the mating forced guidance surface (34'), wherein
the forced guidance surface (34) is positionable, in particular approachable, relative to the mating forced guidance surface (34') by adjustment of the position of the adjustment surface (33) by moving the retaining clip (31) with its mating forced guidance surface (34') along the forced guidance surface (34), and the guide clearance is variable.

7. The wedge drive (1) according to the preceding claim, wherein
the second wedge part (20) is formed in two parts and has a forced guide track (23) with the forced guidance surface (34) and an additional adjustment surface (36), and
the forced guidance surface (34) is positionable, in particular removable, relative to the mating forced guidance surface (34') by adjustment of the position of the additional adjustment surface (36) by moving the retaining clip (31) with its mating forced guidance surface (34') along the forced guidance surface (34), and the guide clearance is variable.

8. The wedge drive (1) according to any one of preceding claims, wherein
it has a forced return apparatus which is formed by the guide device with the retaining clip (31), by which, upon an upward stroke directed in the stroke direction (Z), the first wedge drive part (10) or the second wedge drive part (20) is guidable along the respective other wedge drive part (20, 10) along the sliding direction (X, X', X") from a working position into a home position.

9. An adjustable guide system for a wedge drive (1), comprising a guide apparatus, having first and second wedge drive parts (10, 20), which is formed by the first and second wedge drive parts (10, 20), wherein
the first and second wedge drive parts (10, 20) are movable, by means of a stroke directed in a stroke direction (Z) and guided by the guide apparatus, relative to one another and along a gliding direction (X, X', X") determined by the guide apparatus and at an angle with respect to the stroke direction (Z), wherein
the guide apparatus has a retaining clip (31),
the retaining clip (31) is fixed to the first wedge drive part (10) and mounted on the second wedge drive part (20) with a sliding guide of the guide apparatus so as to be movable in the sliding direction (X, X', X"),
**characterized in that**
a guide clearance of the sliding guide is variable by means of an adjustment means of the guide apparatus, which has an adjustment surface (33) and a forced guidance surface (34),
wherein, by adjustment of a position of the adjustment surface (33), a guide part (32) of the guide apparatus is movable along the forced guidance surface (34) and the guide clearance is variable thereby, wherein
a normal vector (N) of the forced guidance surface (34) is at angle to a plane of movement spanned by the stroke direction (Z) and the sliding direction (X, X', X"), **characterized in that** the adjustment surface (33) is provided on an adjustment part, and the position of the adjustment surface (33) is movable in parallel by material removal on the adjustment part,
wherein the adjustment part of the first wedge drive part (10), the second wedge drive part (20), the retaining clip (31) or the guide part (32) is or is comprised by an adapter part.

## Revendications

1. Chasse-clavette (1) comprenant une première et une deuxième partie de chasse-clavette (10, 20) et un dispositif de guidage ajustable, constitué au moins partiellement par la première et la deuxième partie de chasse-clavette qui peuvent être déplacées au moyen d'une course orientée dans une direction de course (X) l'une par rapport à l'autre ainsi que le long d'une direction de glissement (X, X', X"), déterminée par le dispositif de guidage et inclinée par rapport à la direction de course (Z), en étant guidées par le dispositif de guidage, dans lequel le dispositif de guidage présente un étrier de retenue (31),
l'étrier de retenue (31) est fixé à la première partie de chasse-clavette (10) et est monté mobile au niveau de la deuxième partie de chasse-clavette (20) par un guidage à glissement du dispositif de guidage dans la direction de glissement (X, X', X"),
dans lequel un jeu de guidage du guidage à glissement est réglable par un moyen d'ajustage du dispositif de guidage, qui présente une surface d'ajustage (33) et une surface de guidage forcé (34),
dans lequel un ajustage d'une position de la surface d'ajustage (33) permet de déplacer une partie de guidage (32) du dispositif de guidage le long de la surface de guidage forcé (34) et de régler ainsi le jeu de guidage,
dans lequel un vecteur normal (N) à la surface de guidage forcé (34) est incliné par rapport à un plan de mouvement défini par la direction de course (Z) et la direction de glissement (X, X', X"),
**caractérisé en ce que**
la surface d'ajustage (33) est prévue au niveau d'une partie d'ajustage, et la partie d'ajustage est réalisée de telle sorte que la position de la surface d'ajustage (33) peut être déplacée en parallèle par enlèvement de matière au niveau de la partie d'ajustage,
la partie d'ajustage est la première partie de chasse-clavette (10), la deuxième partie de chasse-clavette (20), l'étrier de retenue (31) ou la partie de guidage (32) ou est comprise dans celle-ci sous forme de pièce d'adaptation,
dans lequel la première partie de chasse-clavette (10) est un chassoir (4) ou une glissière coulissante (2), et la deuxième partie de chasse-clavette (20) est un coulisseau (3) ou
la première partie de chasse-clavette (10) est le coulisseau (3) et la deuxième partie de chasse-clavette (20) est la glissière coulissante (2).

2. Chasse-clavette (1) selon la revendication précédente, dans lequel une droite d'intersection de la surface de guidage forcé (34) et du plan de mouvement est parallèle à la direction de glissement (X, X', X").

3. Chasse-clavette (1) selon l'une quelconque des revendications précédentes, dans lequel
le vecteur normal (N) est incliné par rapport au plan de mouvement selon un angle α, et l'angle α est compris entre 0 et 90°, les valeurs 0 et 90 étant exclues, de préférence entre 20° et 60°.

4. Chasse-clavette (1) selon l'une quelconque des revendications précédentes, dans lequel
la deuxième partie de chasse-clavette (20) présente la surface de guidage forcé (34),
la partie de guidage (32) réalise la surface d'ajustage (33) et une contre-surface de guidage forcé (34') correspondant à la surface de guidage forcé (34), et
le guidage à glissement est déterminé par une surface de glissement (35) prévue au niveau de la partie de guidage (32) et une contre-surface de glissement (35') prévue au niveau de l'étrier de retenue (31), dans lequel
la surface de glissement (35) peut être positionnée, en particulier rapprochée, par rapport à la contre-surface de glissement (35') par un ajustage de la position de la surface d'ajustage (33) au niveau de la partie de guidage (32) par un déplacement de la partie de guidage (32) avec sa contre-surface de guidage forcé (34') le long de la surface de guidage forcé (34), et le jeu de guidage peut être réglé.

5. Chasse-clavette (1) selon l'une quelconque des revendications précédentes 1 à 3, dans lequel
la première partie de chasse-clavette (10) présente la surface de guidage forcé (34) et la surface d'ajustage (33),
l'étrier de retenue (31) réalise une contre-surface de guidage forcé (34') correspondant à la surface de guidage forcé (34), et comprend la partie de guidage (32), et
le guidage à glissement est déterminé par une surface de glissement (35) prévue au niveau de la deuxième partie de chasse-clavette (20) et une contre-surface de glissement (35') prévue au niveau de l'étrier de retenue (31), dans lequel la surface de glissement (35) peut être positionnée, en particulier rapprochée, par rapport à la contre-surface de glissement (35') par un ajustage de la position de la surface d'ajustage (33) au niveau de la première partie de chasse-clavette (10) par un déplacement de la partie de guidage (32) avec sa contre-surface de guidage forcé (34') le long de la surface de guidage forcé (34), et le jeu de guidage peut être réglé.

6. Chasse-clavette (1) selon l'une quelconque des revendications précédentes 1 à 3, dans lequel
la deuxième partie de chasse-clavette (10) réalise la surface de guidage forcé (34), la première partie de chasse-clavette (10) réalise la surface d'ajustage (33), et l'étrier de retenue (31) réalise une contre-surface de guidage forcé (34') correspondant à la surface de guidage forcé (34) et comprend la partie de guidage (32), et
le guidage à glissement est déterminé par la surface de guidage forcé (34) et la contre-surface de guidage forcé (34'), dans lequel
la surface de guidage forcé (34) peut être positionnée, en particulier rapprochée, par rapport à la contre-surface de guidage forcé (34') par un ajustage de la position de la surface d'ajustage (33) par un déplacement de l'étrier de retenue (31) avec sa contre-surface de guidage forcé (34') le long de la surface de guidage forcé (34), et le jeu de guidage peut être réglé.

7. Chasse-clavette (1) selon la revendication précédente, dans lequel
la deuxième partie de chasse-clavette (20) est réalisée en deux parties et présente un rail de guidage forcé (23) avec la surface de guidage forcé (34) et une surface d'ajustage supplémentaire (36), et
la surface de guidage forcé (34) peut être positionnée, en particulier éloignée, par rapport à la contre-surface de guidage forcé (34') par un ajustage de la position de la surface d'ajustage supplémentaire (36) par un déplacement de l'étrier de retenue (31) avec sa contre-surface de guidage forcé (34') le long de la surface de guidage forcé (34), et le jeu de guidage peut être réglé.

8. Chasse-clavette (1) selon l'une quelconque des revendications précédentes, dans lequel
celui-ci présente un dispositif de rappel forcé qui est formé par le dispositif de guidage avec l'étrier de retenue (31), qui permet de guider la première partie de chasse-clavette (10) ou la deuxième partie de chasse-clavette (20), en cas de course ascendante orientée dans la direction de course (Z), le long de l'autre partie de chasse-clavette (20, 10) respectivement, le long de la direction de glissement (X, X', X") d'une position de travail à une position initiale.

9. Système de guidage ajustable pour un chasse-clavette (1), comprenant un dispositif de guidage avec une première et une deuxième partie de chasse-clavette (10, 20), qui est constitué par la première et la deuxième partie de chasse-clavette (10, 20), dans lequel
la première et la deuxième partie de chasse-clavette (10, 20) peuvent être déplacées au moyen d'une course orientée dans une direction de course (X) l'une par rapport à l'autre, ainsi que le long d'une direction de glissement (X, X', X"), déterminée par le dispositif de guidage et inclinée par rapport à la direction de course (Z), en étant guidées par le dispositif de guidage, dans lequel le dispositif de guidage présente un étrier de retenue (31),
l'étrier de retenue (31) est fixé à la première partie de chasse-clavette (10), et est monté mobile au niveau de la deuxième partie de chasse-clavette (20) par un guidage à glissement du dispositif de guidage dans la direction de glissement (X, X', X"),
**caractérisé en ce que**
un jeu de guidage du dispositif de guidage peut être réglé par un moyen d'ajustage du dispositif de guidage qui présente une surface d'ajustage (33) et une surface de guidage forcé (34),
dans lequel un ajustage d'une position de la surface d'ajustage (33) permet de déplacer une partie de guidage (32) du dispositif de guidage le long de la surface de guidage forcé (34), et de ce fait le jeu de guidage peut être réglé, dans lequel un vecteur normal (N) à la surface de guidage forcé (34) est incliné par rapport à un plan de mouvement défini par la direction de course (Z) et la direction de glissement (X, X', X"),
**caractérisé en ce que** la surface d'ajustage (33) est prévue au niveau d'une partie d'ajustage, et la position de la surface d'ajustage (33) peut être déplacée en parallèle par enlèvement de matière sur la partie d'ajustage,
dans lequel la partie d'ajustage est la première partie de chasse-clavette (10), la deuxième partie de chasse-clavette (20), l'étrier de retenue (31) ou la partie de guidage (32) ou est comprise dans celle-ci sous forme de pièce d'adaptation.
